# DEMANDE DE BREVET EUROPEEN

(11) **EP 0 974 943 A1**
(43) Date de publication de la demande: **26.01.2000**
(21) Numéro de dépôt: 99450015.5
(22) Date de dépôt: 06.07.1999
(51) Int. Cl.: G07G 1/00, G06F 17/60

(54) **Procédé de traitement d'informations provenant de titulaires identifiés, en vue de permettre l'émission de données en retour vers lesdits titulaires**

(30) Priorité: 07.07.1998 FR 9808853
(71) Demandeur: Bertrand, André, 13400 Aubagne (FR)
(72) Inventeur: Berard, Jean, 33370 Artigues Pres Bordeaux (FR); Bertrand, André, Chemin des Cressauds, 13400 Aubagne (FR)
(74) Mandataire: Thébault, Jean-Louis

(57) **Abrégé**

L'objet de l'invention est un procédé de traitement d'informations provenant d'un titulaire identifié à partir d'un code, en vue de permettre l'émission de données en retour vers ledit titulaire, à travers un terminal relié à une unité centrale de collecte et de traitement, caractérisé en ce que :
- des informations sont saisies, automatiquement ou manuellement concernant les actions du titulaire, à travers le terminal dans un fichier, après identification du titulaire,
- ce fichier d'informations est transmis vers l'unité centrale de collecte et de traitement,
- ces informations sont analysées en fonction de paramètres extérieurs visant à diriger les actions dudit titulaire,
- des indications en retour visant à diriger les actions dudit titulaire sont transmises au terminal, et
- ces indications sont portées à la connaissance du titulaire dès qu'il est de nouveau identifié par le terminal.

## Description

La présente invention concerne le traitement d'informations provenant de titulaires, identifiés à partir d'un code, en vue de permettre l'émission de données en retour vers lesdits titulaires.

On sait par exemple que les coupons de réduction sont fortement appréciés de la clientèle dans le cadre d'achats, plus particulièrement dans les magasins spécialisés comme les parfumeries, les maroquineries, les bijouteries, les magasins de sport, ou certains magasins d'alimentation.

On connaît des procédés de fidélisation qui consistent simplement à attribuer à des clients des réductions en fonction du nombre et/ou du type d'achats mais sans distinction, ce qui relève de techniques de commercialisation vulgarisées. Les industriels peuvent donc agir auprès des acheteurs et infléchir les ventes par des variations sur les tarifications, mais ils ne peuvent traiter des informations en retour que sur un plan général et d'après les ventes réalisées, ce qui induit un certain retard dans les réactions sur le terrain. Il n'y a aucun outil permettant une circulation de l'information à double sens.

Ainsi, il n'est prévu aucune personnalisation des conditions d'achat en fonction du client et de ses habitudes, de ses goûts, de son profil, de son âge ou de tout autre critère personnel.

Il existe des fichiers d'informations qui permettent des adaptations en fonction de certains critères comme la date de naissance. Dans ce cas, avec un certain délai préalable, il est proposé une réduction, une prestation spéciale, mais cela nécessite un envoi spécifique et tout un traitement qui implique des coûts et une gestion lourde. On note aussi que seul un des paramètres est traité, celui de la date anniversaire par exemple, mais en aucun cas, les caractéristiques propres de l'individu sont prises en compte.

De plus, il est impossible de constituer un fichier général par un interrogatoire direct des clients tant pour des raisons de confidentialité que de temps nécessaire et de coûts engendrés par la saisie a posteriori de ces informations. De plus, les réponses peuvent présenter des erreurs d'appréciation des clients eux-mêmes et le profil peut varier au cours du temps.

Aussi, le présent procédé vise à traiter les informations recueillies à partir de données d'un titulaire pour permettre de diriger des données en retour, du type personnalisées, après traitement, vers le titulaire lui-même, avec émission d'une liste, de préférence en double exemplaires, portant ces données. Dans le cas d'une émission de deux listes, la première est conservée par l'acheteur et la seconde est conservée par le vendeur, chaque liste portant des informations traitées pour inciter ledit titulaire à des actions futures spécifiques, en fonction de données extérieures fournies par la production industrielle comme l'évolution climatique d'une saison, la mise sur le marché d'un nouveau produit, ou des stocks importants.

A cet effet, selon l'invention, le procédé de traitement d'informations provenant d'un titulaire identifié à partir d'un code, en vue de permettre l'émission de données en retour vers ledit titulaire, à travers un terminal relié à une unité centrale de collecte et de traitement, se caractérise en ce que :
- des informations sont saisies, automatiquement ou manuellement concernant les actions du titulaire, à travers le terminal dans un fichier, après identification du titulaire,
- ce fichier d'informations est transmis vers l'unité centrale de collecte et de traitement,
- ces informations sont analysées en fonction de paramètres extérieurs visant à diriger les actions dudit titulaire,
- des indications en retour visant à diriger les actions dudit titulaire sont transmises au terminal, et
- ces indications sont portées à la connaissance du titulaire dès qu'il est de nouveau identifié par le terminal.

Les indications en retour sont portées à la connaissance du titulaire par une impression papier.

L'impression papier est double.

L'identification est réalisée à travers une carte magnétique ou à puce et le terminal est un terminal de paiement électronique.

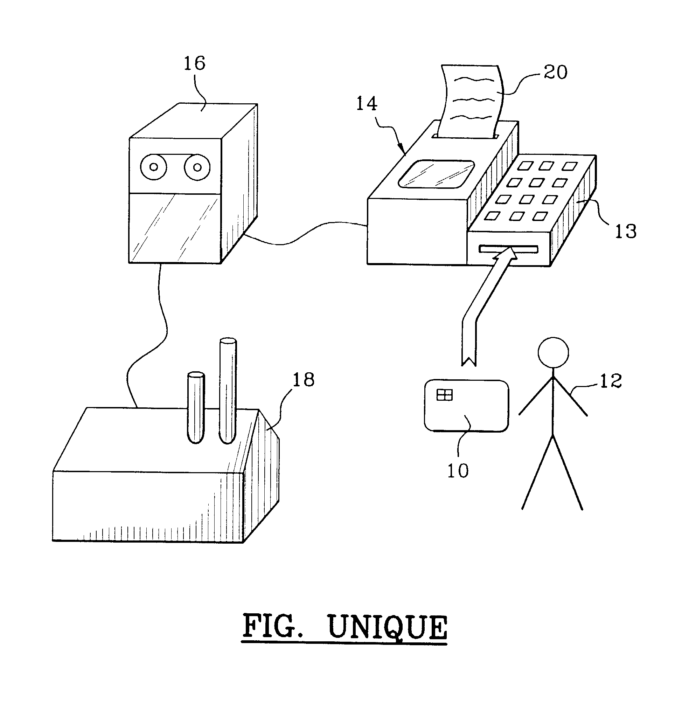

La présente invention est maintenant décrite dans le cas d'un exemple précis, non limitatif, en regard du synoptique annexé à titre de dessin comprenant une figure unique.

L'exemple indiqué concerne un client dans un magasin qui procède à l'achat de produits.

Le procédé de traitement de l'information selon l'invention consiste à prévoir des supports 10 d'identification de clients 12. De façon simple, on utilise comme support 10 une carte magnétique ou à mémoire afin d'enregistrer les coordonnées du client et certains paramètres simples comme la date de naissance.

Le lieu de vente comprend un terminal 13, généralement connu sous le nom de terminal de paiement électronique, TPE. Ce TPE permet de saisir initialement lesdites coordonnées, en plus de ses fonctions habituelles de traitement de cartes bancaires et d'émission d'un ticket de transaction.

Cette carte est donc introduite lors de la première utilisation afin d'inscrire les coordonnées puis le titulaire procède à ses achats. Les achats sont inscrits dans un fichier 14 "produit" correspondant au titulaire lorsqu'il passe en caisse.

Chaque jour les fichiers 14 "produits" de chacun des titulaires 12 sont transférés à une unité 16 centrale de collecte et de traitement.

A partir des données des ventes et des paramètres concernant les produits identifiés par exemple par leurs codes à barres, les fournisseurs 18 décident d'une stratégie dont le contenu a peu d'importance pour l'invention et qui, par contre, se traduit par des avantages à l'attention des titulaires.

Un premier exemple est le fait d'accorder à un acheteur une réduction de 50% sur l'achat d'un produit X dont le titulaire a déjà acheté trois exemplaires.

Un second exemple est, pour un titulaire ayant acheté le produit X , de l'informer qu'il existe un produit X1 qui est nouveau et qui présente une action complémentaire.

A cet effet, le fournisseur entre ou fait entrer dans l'unité centrale de collecte et de traitement les paramètres relatifs à ces deux informations, pour les fichiers qui sont concernés.

Par télédéchargement, ces paramètres sont ensuite transmis aux différents TPE, et mémorisés dans les fichiers des titulaires concernés par ces deux informations.

Dès lors, si un titulaire entre dans le lieu de vente et introduit sa carte dans le TPE de ce lieu, ce TPE émet un bulletin 20, de préférence double, dont au moins un exemplaire est destiné au titulaire. Sur ce bulletin apparaissent les deux informations qui étaient prévues à l'attention dudit titulaire, concernant les deux produits particuliers X et X1.

L'éventuel second bulletin est conservé par une personne du lieu de vente en sorte de guider le titulaire vers les objectifs correspondants aux informations du bulletin, si cela est nécessaire.

Ce procédé quasi-intéractif permet un traitement sophistiqué de l'information, un ciblage des actions à mener et un bon ajustement de la production industrielle.

De plus, un tel dispositif permet aussi de sélectionner les informations transmises à un TPE. En effet, il est possible de ne mémoriser dans un TPE donné correspondant à un point de vente que les informations concernant les titulaires qui ont été enregistrés. Lorsqu'un titulaire change de lieu de vente et que la carte est introduite dans ce nouveau lieu de vente, le TPE n'ayant pas dans ses fichiers ce titulaire, peut appeler l'unité centrale de collecte et de traitement pour qu'elle décharge instantanément les données concernant ce client. De plus, si à plusieurs reprises, par exemple 3 fois consécutivement, le titulaire se présente en ce même lieu, l'unité centrale de collecte et de traitement affectera automatiquement au TPE de ce nouveau lieu de vente, les informations concernant ce titulaire. Ceci permet une meilleure gestion de la mémoire de chacun des TPE des différents lieux de vente.

Selon l'invention il est aussi possible d'associer aux informations du fournisseur des informations obtenues par interrogation directe. En effet, il convient de prévoir un fichier avec des questions/réponses qui ne nécessitent qu'une saisie réduite par une action binaire oui ou non. Contrairement aux enquêtes à mener sur le terrain ou par téléphone dont on sait qu'elles sont consommatrices de temps et coûtent cher, il est dans le cas du présent procédé d'obtenir les informations au moment de la saisie des informations de personnalisation et d'identification.

Par exemple, il est possible, à l'aide d'un crayon optique, de saisir des codes à barres correspondant aux caractéristiques d'une peau :
- taux de rides léger, moyen ou important, ou encore
- peau sèche, mixte ou grasse.

Ces informations permettent de sélectionner les produits adaptés.

De même, ces informations peuvent devenir obsolètes avec le temps et le procédé d'émission d'un ticket dès la reconnaissance du titulaire permet de réactualiser les informations recueillies initialement à travers le ticket qui émet un questionnaire ou rappelle au titulaire la possibilité de réactualiser son profil.

On note que dans ce cas, les avantages conférés par le procédé sont conservés puisqu'il n'y a aucune nécessité de faire une action séparée d'information par exemple à travers un mailing.

## Revendications

1. Procédé de traitement d'informations provenant d'un titulaire identifié à partir d'un code, en vue de permettre l'émission de données en retour vers ledit titulaire, à travers un terminal relié à une unité centrale de collecte et de traitement, caractérisé en ce que :
- des informations sont saisies, automatiquement ou manuellement concernant les actions du titulaire, à travers le terminal dans un fichier, après identification du titulaire,
- ce fichier d'informations est transmis vers l'unité centrale de collecte et de traitement,
- ces informations sont analysées en fonction de paramètres extérieurs visant à diriger les actions dudit titulaire,
- des indications en retour visant à diriger les actions dudit titulaire sont transmises au terminal, et
- ces indications sont portées à la connaissance du titulaire dès qu'il est de nouveau identifié par le terminal.

2. Procédé selon la revendication 1, caractérisé en ce que les indications en retour sont portées à la connaissance du titulaire par une impression papier.

3. Procédé selon la revendication 2, caractérisé en ce que l'impression papier est double.

4. Procédé selon l'une quelconque des revendications précédentes, caractérisé en ce que l'identification est réalisée à travers une carte magnétique ou à puce et en ce que le terminal est un terminal de paiement électronique.
